# EUROPÄISCHE PATENTSCHRIFT

(11) **EP 0 868 290 B1**
(45) Veröffentlichungstag und Bekanntmachung des Hinweises auf die Patenterteilung: **12.07.2000**
(21) Anmeldenummer: 96941643.7
(22) Anmeldetag: 03.12.1996
(51) Int. Cl.: B29C 65/34, F16L 47/02

(54) **VERFAHREN UND ELEKTROSCHWEISSGERÄT ZUM SELBSTTÄTIGEN SCHWEISSEN VON HEIZWENDEL-FITTINGEN**
METHOD AND ARC WELDING DEVICE FOR AUTOMATICALLY WELDING HEATER COIL FITTINGS
PROCEDE ET DISPOSITIF DE SOUDAGE A L'ARC POUR LE SOUDAGE AUTOMATIQUE DE RACCORDS POURVUS D'UN FILAMENT CHAUFFANT EN SPIRALE

(30) Priorität: 05.12.1995 DE 19545317
(43) Veröffentlichungstag der Anmeldung: 07.10.1998
(73) Patentinhaber: HÜRNER GMBH, 60489 Frankfurt (DE)
(72) Erfinder: MERLE, Bernd, D-36304 Alsfeld (DE)
(74) Vertreter: Schubert, Siegmar, Dipl.-Ing.
(86) Internationale Anmeldenummer: EP9605351
(87) Internationale Veröffentlichungsnummer: WO9720682

(56) Entgegenhaltungen:
- EP-A- 0 067 621
- EP-A- 0 335 010
- WO-A-79/01000
- WO-A-95/16557
- CH-A- 529 628
- CH-A- 668 741
- DE-A- 4 343 449
- FR-A- 2 572 326
- US-A- 4 684 789
- US-A- 4 695 335
- PATENT ABSTRACTS OF JAPAN vol. 001, no. 055 (M-020), 27.Mai 1977 & JP 52 007020 A (NIPPON KOKAN KK), 19.Januar 1977,

## Beschreibung

Die Erfindung betrifft ein Verfahren zum selbsttätigen Schweißen von Heizwendel-Fittingen im wesentlichen aus Kunststoff gemäß dem Oberbegriff des Anspruchs 1.

Eine Variante der Erfindung betrifft ein entsprechendes Elektroschweißgerät zum selbsttätigen Schweißen von Heizwendel-Fittingen im wesentlichen aus Kunststoff gemäß dem Oberbegriff des Anspruchs 7.

Zum Verbinden aus Kunststoffrohren, insbesondere Gasleitungsrohren aus Kunststoff, dienen nach dem Stand der Technik häufig Fittinge, die ebenfalls im wesentlichen aus Kunststoff bestehen und die auf ihrer Innenfläche eine elektrische Spule aus leitendem Material aufweisen. Die Spule wird zum Verbinden der Rohrenden mittels des Fittings mit einem so großen Schweißstrom beaufschlagt, daß der Kunststoff im Fitting und auf den Rohrenden verschmelzen und anschließend aushärten kann. Die Kunststoffteile bestehen insbesondere aus Polyäthylen.
Um auch bei verschiedenen Umgebungsbedingungen, insbesondere der Umgebungstemperatur, den richtigen Schmelzgrad des Kunststoffs des Fittings, welches mit einem Rohr zu verbinden ist, zu erreichen, wurde bereits die Umgebungstemperatur vor bzw. während des Schweißvorgangs zur Bemessung der dem Heizwendel wäherend des Schweißens zugeführten elektrischen Energie oder Arbeit in Rechnung gestellt.

Im einzelnen wird bei einem aus der Praxis bekannten Elektroschweißgerät in Abhängigkeit von den Daten des zu schweißenden Rohrs und des Fittings sowie von der Umgebungstemperatur die Schweißzeit vorgegeben, die aus einer inkremental gebildeten Grundzeit von der Umgebungstemperatur variabel gebildet wird. Die Schweißspannung, welche den Schweißstrom durch die Spule des Fittings treibt, wird in Abhängigkeit von den Daten des Fittings, insbesondere dessen Durchmesser vorgegeben und unabhängig von der Bildung der Schweißzeit konstant gehalten. Die Abschaltung der Schweißspannung erfolgt von dieser unabhängig zeitgesteuert. Die Eingabe der Daten des Fittings und des Rohrs wird manuell durchgeführt. Dies gilt auch für die Eingabe der Umgebungstemperatur. Deswegen ist bei diesem Elektroschweißgerät zusätzlich nachteilig, daß durch falsche Eingabe mittels Tasten die Gefahr besteht, daß die Schweißung nicht optimal durchgeführt wird, ohne hierüber eine unmittelbare Kontrolle zu erlauben.

Es ist aber auch eine weitgehend automatisierte Eingabe der Daten des Fittings durch Abtasten eines Strichcodes sowie eine selbsttätige Berücksichtigung der Umgebungstemperatur mit einem Umgebungstemperaturfühler bekannt (FR-A-25 72 326). Der Strichcode ist auf einer Kennkarte enthalten, die mit dem Heizwendelfitting verbunden ist. Die von dem Abtaster abgetasteten Daten werden über einen Pulsformer und einen Decodierer sowie über einen Prüfschaltkreis in einen Eingang eines Reglers eingegeben, welcher einen Meßstrom regelt. Generell soll der Regler die Intensität und die Dauer des Heizvorgangs bzw. der Schweißung regeln. Das Schweißprogramm wird entsprechend der gemessenen Temperatur geändert. Es handelt sich aber stets darum, einen einzigen Schweißschritt ohne sonstige Temperaturbeeinflussung des Fittings oder des Rohrs durchzuführen. Ein zusätzlicher Nachteil dieses Elektroschweißgeräts besteht darin, daß eine Fülle von einzelnen Parametern einzugeben und mit dem Schweißprogramm zu verknüpfen sind, damit der Regler mit dem annäherend optimalen Schweißfaktor die Schweißleistung über den Schweißstrom und die Schweißzeitdauer regeln kann.

Diesem Nachteil wurde abgeholfen, um wenigstens in einem bestimmten Umgebungstemperaturbereich mit hoher Sicherheit eine ordungsgemäße Schweißung mit annähernd optimalem Schweißfaktor ohne umständliche Bildung bzw. Veränderung eines Schweißprogramms zu erreichen (EP 0 335 010 B1). Bei diesem bekannten Elektroschweißgerät wird die für den optimalen Schweißfaktor maßgebende Größe, nämlich die Soll-Schweißarbeit, direkt durch Abtastung in die Steuerungseinrichtung eingespeist, die einen Regler umfaßt, der diese Soll-Schweißarbeit mit der jeweils aktuellen Ist-Schweißarbeit vergleicht. Bei Gleichheit dieser Größen wird die Schweißung beendet. Zur Überwachung der Grenzen der Schweißzeit ist zusätzlich eine Schweißzeitüberwachungseinrichtung vorgesehen, weiche die von dem Fitting abgetasteten Grenzdaten zulässiger Schweißzeiten aufnimmt, die Grenzen zulässiger Schweißzeiten mit der Isz-Schweißzeit vergleiche und bei Über- bzw. Unterschreiten der zulässigen Schweißzeiten eine Sperreinrichtung zum Stoppen des Schweißstromes und, oder eine Meldeeinrichtung auslöst.

Auch dem letztgenannten Elektrogeschweißgerät wie anderen bekannten Elektroschweißgeräten haftet jedoch die Einschränkung an, daß die Schweißgüte beim Einsatz in Bereichen mit hoher Luftfeuchtigkeit und relativ niedriger Temperatur in dem Temperaturbereich von typisch 10°C bis 30°C nicht optimal ist. Dadurch wird insbesondere eine Reparatur durch Schweißen während des Winters problematisch. Dies führt dazu, daß bei Temperaturen niedriger als 5°C bis etwa -10°C die Verschweißung nur mit Zusatzmaßnahmen wie einem beheizten Montageraum, in der Regel einem Zelt, durchgerührt werden darf, wobei die Zusatzmaßnahmen eine Temperatur der Schweißsteile, d.h. der Schweißflächen des Fittings und des zu schweißenden Rohrs sowie der dazwischen befindlichen Luft, von mindestens 5°C sicherstellen sollen. Das Erreichen dieser Mindesttemperatur an der Schweißstelle ist jedoch trotz der Zusatzmaßnahmen nicht sicher.

Um dem abzuhelfen, ist bereits ein mit einem Apparat zum Schweißen von Heizwendelfittingen ausgeübtes Verfahren im wesentlichen der eingangs genannten Gattung bekannt (WO 95/16557), bei dem generell ein Trocknungsvorgang des Heizwendelfittings durch dessen Erwärmen auf eine Temperatur abläuft, die unterhalb der Schmelztemperatur des thermoplastischen Kunststoffs des Heizwendelfittings liegt. Im einzelnen wird dazu der Heizwendel mit einem gegenüber dem Schweißstrom herabgesetzten Strom während einer vorgegebenen Zeitdauer beaufschlagt. Der Apparat bzw. das mit ihm ausgeübte Verfahren sehen auch eine Erfassung der Umgebungstemperatur vor, bei der der Heizwendelfitting verschweißt wird, um danach die Scbweißdauer zu variieren. Jedoch wird der Heizwendelfitting für den Trocknungsvorgang standardmäßig stets vorgewärmt, und zwar mit einem von der Umgebungstemperatur unabhängigen Vorwärmstrom während einer von dieser ebenfalls unabhängigen Vorwärmzeit. Daraus ergibt sich der Nachteil einer längeren Gesamtbearbeitungszeit der Heizwendelfittingverbindung auch dann, wenn keine oder nur eine verkürzte Trocknung benötigt wird.

Der vorliegenden Erfindung liegt daher die Aufgabe zugrunde, ein Verfahren zum selbsttätigen Schweißen von Heizwendelfittingen im wesentlichen aus Kunststoff der eingangs genannten Gattung, bei dem ohne beheizten Montageraum eine sichere Schweißung auch bei niedriger Umgebungstemperatur und hoher Luftfeuchte gewährleistet wird, zu optimieren.

Diese Aufgabe wird durch die Weiterbildung des Verfahrens mit den in dem kennzeichnenden Teil des Anspruchs 1 angegebenen Verfahrensschritten erreicht.

Eine Elektroschweißgerät, welches sich besonders zur Durchführung dieses Verfahrens eignet, ist in Anspruch 7 angegeben.

Sowohl das Verfahren als auch das Elektroschweißgerät beinhalten eine Steuerung bzw. Regelung, die von der Vorgabe einer Vorwärm- und Entfeuchtungsenergiemenge ausgeht, die erforderlich ist, um die Schweißzone am Rohr sowie am Fitting so weit vorzuwärmen, d.h. durchzuwärmen, daß sich eine Temperatur der Schweißflächen und der dazwischen befindlichen Luft in dem Bereich zwischen 25 - 50°C für eine definierte Zeit, welche insbesondere von der Außentemperatur, der Baugröße des Fittings und der Schweißflächen abhängig ist, einstellt. Dabei ist wesentlich, daß es sich nicht um eine bloße Verlängerung bzw. Variation der Schweißzeit mit konstanter Schweißleistung handelt, sondern um einen der eigentlichen Schweißung vorangehenden Vorwärm- und Entfeuchtungsschritt mit herabgesetzter Vorwärmleistung einer Vorwärm- und Entfeuchtungsdauer, die mit Sicherheit ausreicht, um auch bei hoher Luftfeuchtigkeit, die nicht erfaßt zu werden braucht, sämtliche kondensierte Feuchte von den Schweißflächen zu beseitigen.

Damit wird in weiter vorteilhafter Weise die Bildung von Gaslunkern in der Schweißfläche durch eingeschlossenen Wasserdampf verhindert.

Die erforderlichen Parameter zur Bildung der gegenüber der Schweißleistung reduzierten Vorwärmleistung, die über eine bestimmte Vorwärm- und Entfeuchtungsdauer den Heizwendel beaufschlagt, werden durch Messung der Umgebungstemperatur und Erfassung der für das Fitting produktspezifischen Barcodedaten ermittelt, wozu auch der Heizwendelwiderstand gemessen werden kann. Der Heizwendelwiderstand gibt in Verbindung mit dessen Temperaturbeiwert und der zum Meßzeitpunkt gemessenen Umgebungstemperatur eine Prüfungs- und Korrekturmöglichkeit für die anderen Daten bzw. die ihnen zugrundeliegenden Annahmen. Bei der Messung des Heizwendelwiderstands tritt jedoch im Unterschied zu dem Vorwärm- und Entfeuchtungsschritt praktisch keine Temperaturerhöhung ein. Aus diesen Daten wird die erforderlich Vorwärmenergie errechnet, aus der sich wiederum, wenn die Vorwärmleistung festgelegt ist, die Vorwärm- und Entfeuchtungsdauer ergibt. Die Vorwärm- und Entfeuchtungsdauer kann in einer Weiterbildung nach Maßgabe der während des Vorwärmens an der Heizwicklung anliegenden Spannung beeinflußt werden.

Weitere vorteilhafte Ausgestaltungen des Verfahrens ergeben sich aus den Ansprüchen 2 - 6.

Vorteilhafte Weiterbildungen des Elektroschweißgeräts sind in Ansprüchen 8 - 12 angegeben.

Im einzelnen soll nach Anspruch 2 die erhöhte Temperatur, auf welche die Schweißflächen des Fittings und eines benachbarten Rohrs, mit dem das Fitting zu verschweißen ist, sowie die zwischen den Schweißflächen befindliche Luft während der Vorwärm- und Entfeuchtungsdauer vorgewärmt werden, in dem Temperaturbereich von 25 - 50°C liegen. Damit wird auch sichergestellt, daß vorhandene Feuchte an der Schweißstelle bei relativ niedriger Vorwärmarbeit oder Vorwärmenergie verdampft.

Die Vorwärmleistung beträgt dabei zweckmäßig nach Anspruch 3 10 - 30 % der Schweißleistung, die während des eigentlichen Schweißschrittes aufgebracht wird.

Insoweit die Schweißenergie bzw. Schweißarbeit nach Maßgabe der Umgebungstemperatur ermittelt ist, wird nach Anspruch 4 die mit dem Vorwärm- und Entfeuchtungsschritt in das Fitting eingebrachte Vorwärmenergie von der Schweißenergie in Abzug gebracht, um deren optimalen Wert nicht zu verfälschen.

Wenn gemäß Anspruch 5 auf eine vorgegebene Temperatur, die also nicht innerhalb eines definierten Temperaturbereichs schwankt, vorgewärmt wird, liegen für die Schweißung stets die gleichen Ausgangsbedingungen vor. Im diesem Fall kann von vornherein die Schweißenergie so ermittelt werden, daß keine Anpassung, d.h. Herabsetzung der Schweißarbeit oder Schweißenergie, abhängig von der aufgebrachten Vorwärmenergie zu erfolgen hat.

Eine zusätzliche Sicherung der optimalen Schweißung erfolgt gemäß Anspruch 6 dadurch, daß die Vorwärm- und Entfeuchtungsarbeit auf die Einhaltung des Kriteriums selbsttätig überwacht wird, daß der Heizwendel mit der Vorwärm- und Entfeuchtungsarbeit innerhalb eines vorgegebenen Zeitrahmens der Vorwärm- und Entfeuchtungsdauer beaufschlagt wird.

Die für den Vorwärm- und Entfeuchtungsschritt erforderliche Vorwärmenergie und Vorwärm- und Entfeuchtungsdauer hängen im einzelnen von der Umgebungstemperatur der Schweißflächen an dem Rohr und an dem zu verschweißenden Fitting, dem Wärmeleitwert der Materialien, der Stärke der Materialien bzw. der Größe der Schweißflächen, dem Spalt zwischen dem Rohr und dem Fitting in der Schweißzone, dem Heizwendeldrahtdurchmesser, dem Temperaturbeiwert des Heizwendels, dem Heizwendelwiderstand, dem Abstand und der Lage des Heizwendels in dem Fitting ab.

Die besonderen Merkmale des Elektroschweißgeräts nach den Ansprüchen 8 - 12 ergeben sich aus den erläuterten vorteilhaften Verfahrensschritten sinngemäß. Sie werden mit einem geringen apparatetechnischen Aufwand erreicht. Dabei können Baugruppen und Bauelemente einer üblichen Steuerung weitgehend mit genutzt werden, so daß nur wenige zusätzliche Elemente und Baugruppen erforderlich sind.

Die Erfindung wird im folgenden anhand einer Zeichnung mit drei Figuren erläutert. Es zeigt:
- Fig. 1: ein Blockschaltbild des schematisierten Elektroschweißgeräts,
- Fig. 2: ein Ablaufdiagramm des Verfahrens zum selbsttätigen Schweißen und
- Fig. 3: ein Zeitdiagramm, welches die zeitliche Abhängigkeit der elektrischen Leistung darstellt, mit der ein Heizwendel eines Fittings beaufschlagt wird.

Es sei vorweggeschickt, daß der Vorwärm- und Entfeuchtungsschritt, der dem eigentlichen Schweißschritt vorangeht, weitgehend unabhängig von der Art und Weise ist, wie der Schweißschritt durchgeführt wird. Das nachfolgende Ausführungsbeispiel geht von einem Elektroschweißgerät zur Durchführung des Schweißschritts aus, bei dem Soll-Schweißarbeitdaten des Fittings in einen Regler zum Vergleich mit Signalen der Schweißarbeit eingegeben werden und bei dem Grenzdaten zulässiger Schweißzeiten des Fittings in eine Schweißzeitüberwachungseinrichtung von dem Regler eingespeist werden. Der Regler ist mit Schaltkreisen eines Rechners verbunden, welche Signale der Ist-Schweißarbeit aus der erfaßten Schweißleistung sowie aus der Ist-Schweißzeit erzeugen. Die Schweißzeitüberwachungseinrichtung vergleicht die aktuelle Schweißzeit mit den Grenzdaten zulässiger Schweißzeiten. Bei Über- oder Unterschreiten der zulässigen Schweißzeiten wird eine Sperreinrichtung zum Stoppen des Schweißstromes und/oder eine Meldeeinrichtung ausgelöst.

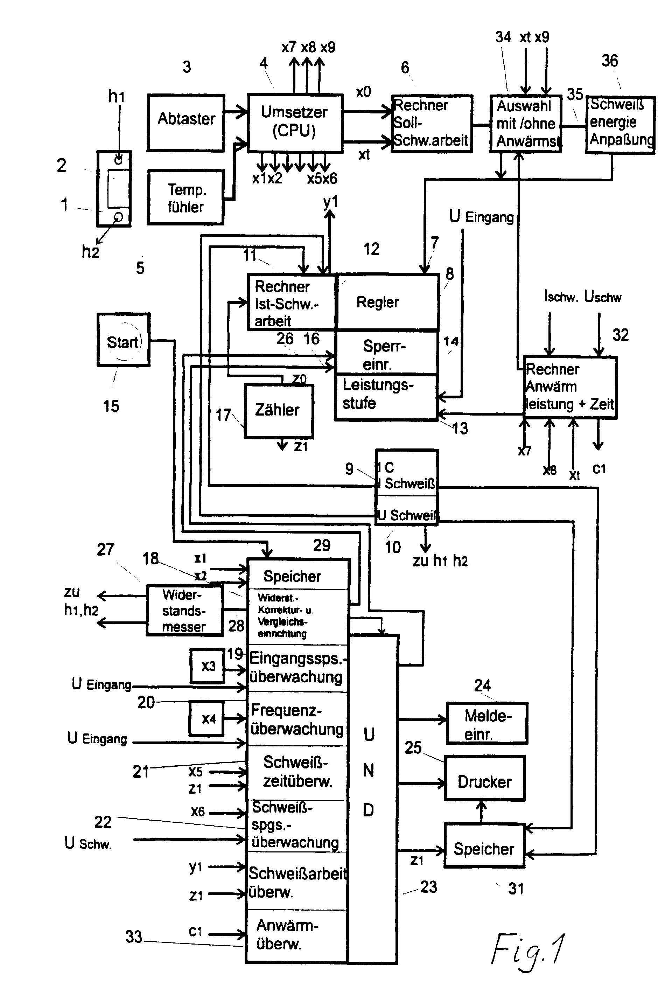

In Fig. 1 ist ein zum Verschweißen mit Kunststoffrohren vorgesehener Heizwendel-Fitting mit 1 bezeichnet. Er weist mit seinem Heizwendel verbundene Anschlüsse hl und h2 auf. Auf seiner Außenseite ist ein Etikett 2 mit Daten in Form eines Strichcodes aufgebracht.

Die Daten können von einem zu dem Elektroschweißgerät gehörenden Abtaster 3 abgegriffen werden. Ein Ausgang des Abtasters ist an einen Umsetzer 4 angeschlossen, welcher die abgetasteten Daten zur Weiterverarbeitung umsetzt und decodiert. Ausgänge des Umsetzers sind mit X0 bis X9 bezeichnet. Jeder dieser Ausgänge ist bestimmten Daten durch die interne Organisation des Umsetzers zugeordnet. Der Umsetzer kann insbesondere durch eine kleine Zentralrechnereinheit verwirklicht sein. Ein weiterer Eingang des Umsetzers ist mit einem Temperaturfühler 5 verbunden, der die jeweilige Umgebungstemperatur erfaßt.

Mit dem Abtaster 3 wird von dem Strichcode des Etiketts insbesondere eine normierte Soll-Schweißarbeit für den betreffenden Fitting abgetastet, der von dem Ausgang X0 des Umsetzers 4 in einen Rechner 6 zur Bildung einer Soll-Schweißarbeit eingespeist wird.

Insoweit die Soll-Schweißarbeit temperaturkorrigiert sein soll, wird von dem Temperaturfühler 5 Gebrauch gemacht, welcher die Umgebungstemperatur des Fittings erfaßt und über den Umsetzer 4 in den Rechner 6 über die Leitung Xₜ einspeist.

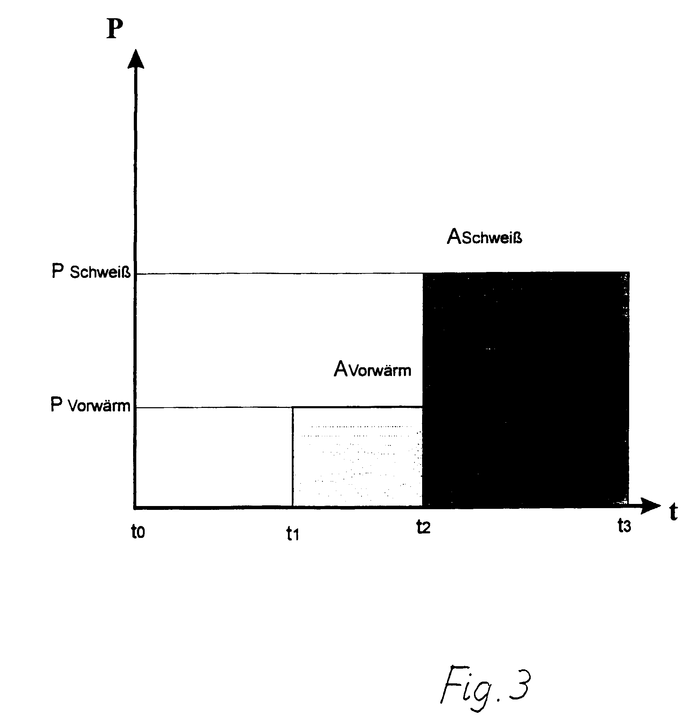

Signale entsprechend der gegebenenfalls temperaturkorrigierten Soll-Schweißarbeit werden in einen ersten Eingang 7 als Sollwerteingang eines Reglers 8 eingegeben, der die Schweißleistung P_{Schw} für eine Schweißdauer steuert und damit die Ist-Schweißarbeit A_{Schw}, vgl. Fig. 3, einregelt.

Die Regelung erfolgt zweckmäßig durch Kontrolle des Effektivwerts des Schweißstroms bei gleichzeitiger Kontrolle durch Rückführung des Schweißstroms und der Schweißspannung. Dazu werden die Effektivwerte des Schweißstroms und der Schweißspannung mit integrierten Schaltkreisen 9,10 gebildet und in den mit einem Rechner 11 zu Errechnung der Ist-Schweißarbeit verbundenen Regler 8 eingespeist. Weitere Eingänge des Reglers befinden sich an einer Schnittstelle 12 zwischen dem Rechner 11 und dem Regler 8.

Der Rechner 6 für die Soll-Schweißarbeit, der Rechner 11 für die Ist-Schweißarbeit sowie der Regler 8 und weitere, unten erläuterte Funktionsgruppen können durch eine Mikroprozessoreinheit mit internen Speichern (EPROM und RAM) sowie eine Ablaufsteuerung realisiert sein.

Ein Ausgang des Reglers 8 steht mit einer Leistungsstufe 13 in Verbindung, die den von dem Regler vorgegebenen Schweißstrom I_{Schw} sowie die Schweißspannung U_{Schw} und damit die Schweißleistung P_{Schw} abgibt. Der Regler 8 und die Leistungsstufe 13 stehen mit einer Sperreinrichtung 14 in Verbindung, die nach Betätigung eines Startknopfes 15 und weiteren Schritten (siehe unten) nach Maßgabe einer nicht dargestellten Ablaufsteuerung den Schweißstrom auslöst, bis ein den Schweißstrom abschaltendes Signal von dem Regler 8 oder ein anderes sperrendes Signal über einen Sperreingang 16 in die Sperreinrichtung gelangt.

Ein von einem nicht dargestellen Taktgenerator gespeister Zähler 17 zählt die Schweißzeit hoch, solange der Schweißstrom I_{Schw} von der Leistungsstufe 13 abgegeben wird. Der Zählvorgang wird beendet, wenn der Schweißstrom durch die Sperreinrichtung 14 gestoppt wird. Von einem Ausgang Z0 des Zählers wird ein Schweißzeitsignal in den Rechner 11 eingespeist. Ein gleiches Schweißzeitsignal steht an dem Ausgang Z1 des Zählers für einen zusätzlichen, sekundären Überwachungsvorgang zur Verfügung. Zur sekundären Überwachung verschiedener Größen, welche die Güte der Schweißung beeinflussen, sind eine Widerstandskorrektur- und Vergleichseinrichtung 18 sowie Überwachungseinrichtungen 19 - 22 für die Eingangsspannung, aus dem die Schweißspannung gebildet wird, die Frequenz, die Schweißzeit und die Schweißspannung vorgesehen. Die Ausgänge dieser Überwachungseinrichtungen sind über ein UND-Glied 23 zusammengeführt an eine Meldeeinrichtung 24, einen Drucker 25 sowie an die Sperreinrichtung 14 über einen Sperreingang 16 angeschlossen.

Mit der Widerstandskorrektur- und Vergleichseinrichtung 18 wird kontrolliert, ob der von dem Etikett 2 abgetastete Wert des Widerstands des Heizwendel-Fittings mit dem tatsächlichen Widerstandswert übereinstimmt, der mit einem Widerstandsmeßkreis 27 gemessen wird. Es sei vermerkt, daß zur Messung des Widerstands in dem Heizwendel ein so geringer Meßstrom fließt, daß praktisch keine Erwärmung des Heizwendels eintritt.

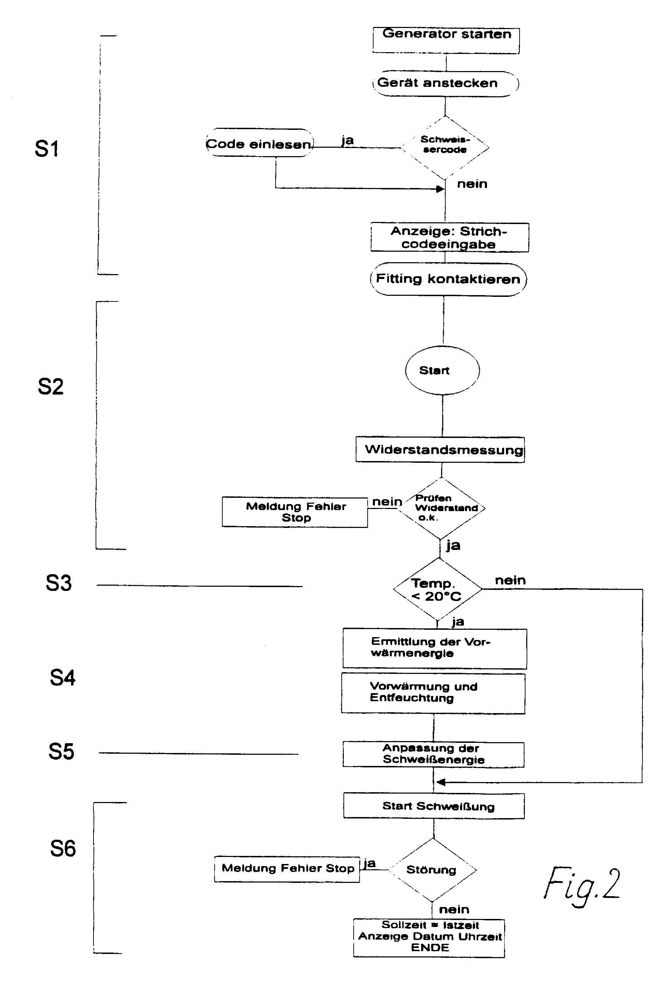

Wenn bei größeren Abweichungen des abgetasteten Widerstandswerts von dem tatsächlichen Widerstandswert keine zuverlässige Schweißung garantiert werden kann, wird der Schweißvorgang verhindert und der Fehler gemeldet. Dieser Ablauf ist in Fig. 2 bei S2 dargestellt. In dem vorangehenden Bereich des Ablaufdiagramms S1 sind die Vorbereitungsarbeiten einschließlich des geschilderten Einlesens des Codes von dem Etikett 2 in den Umsetzer 4 und eine nicht in Fig. 1 dargestellte Anzeige der Strichcodeeingabe angedeutet.

Die Widerstandskorrektur- und Vergleichseinrichtung 18, die intern mit einem Speicher 29 in Verbindung steht, in welchen aus dem Umsetzer von dem Etikett erfaßte Daten des auf eine Bezugstemperatur bezogenen Soll-Widerstands des Fittings sowie ein Temperaturfaktor des Widerstands eingelesen werden, dient nur dazu festzustellen, ob der Ist-Widerstand, der gemessen wird und auf eine stets gleiche Bezugstemperatur von beispielsweise 20°C bezogen wird, innerhalb vorgegebener Grenzwerte mit dem Soll-Widerstand übereinstimmt.

Weiterhin werden überwacht: die Eingangsspannung mit der Spannungsüberwachungseinrichtung 19 durch Vergleich mit vorgegebenen Grenzwerten der Eingangsspannung, die von einem Speicher X3 eingegeben werden, und die Frequenz der Eingangsspannung mit der Frequenzüberwachungseinrichtun 20 durch Vergleich mit den von einem Speicher X4 gespeicherten Grenzwerten der Frequenz . Die Schweißspannungsüberwachungseinrichtung 22 vergleicht den Effektivwert der Schweißspannung U_{Schw} mit Grenzwerten der Schweißspannung, die an dem Ausgang X6 des Umsetzers 4 anstehen. Die Schweißzeitüberwachungseinrichtung 21 überwacht, daß die mit dem Zähler 17 gezählte Ist-Schweißzeit innerhalb von Grenzwerten der Schweißzeit liegt, welche von einem Ausgang X5 des Umsetzers 4 in die Schweißzeitüberwachungseinrichtung eingeleitet werden.

Mit dem Drucker 25 können unter anderem die Grenzwerte überschreitenden Abweichungen der überwachten Betriebsparameter bzw. Schweißparameter protokolliert werden.

Wesentlicher Bestandteil der Weiterbildung des beschriebenen Elektroschweißgeräts ist eine Vorwärmleistungs- und Vorwärmzeitsteuereinrichtung 32, die von Ausgängen X7 und X8 des Umsetzers 4 mit Signalen einer Vorwärmleistung und einer Vorwärmzeit beaufschlagt wird, die mittels des Abtasters 3 von dem Etikett 2 als Daten abgefaßt wurden. Außerdem steht die Vorwärmleistungs- und Vorwärmzeitsteuereinrichtung 32 über eine Leitung Xₜ mit dem Umsetzer in Verbindung, die ein Signal entsprechend der von dem Temperaturfühler 5 erfaßten Umgebungstemperatur führt.

Mit der das Temperatursignal führenden Leitung Xₜ wird auch die nicht dargestellte Ablaufsteuerung beeinflußt, und zwar so, daß dem oben erörterten Verfahrensschritt des Schweißens ein Vorwärm- und Entfeuchtungsschritt vorgeschaltet wird, der in dem Ablaufdiagramm nach Fig. 2 mit S4 bezeichnet ist. Dieser Vorwärm- und Entfeuchtungsschritt wird aktiviert, wenn die Umgebungstemperatur unter einen vorgegebenen Wert von beispielsweise 20°C sinkt. Dies ist mit der Entscheidungsstelle S3 in Fig. 2 angedeutet.

Zur Aktivierung des Vorwärm- und Entfeuchtungsschritts wird die Vorwärmleistungs- und Vorwärmzeitsteuereinrichtung 32 in Fig. 1 durch die Ablaufsteuerung gemäß den in 32 eingespeisten Signalen der Vorwärmleistung und Vorwärmzeit bzw. Vorwärmzeitdauer aktiviert. Die Vorwärmleistungs- und Vorwärmzeitsteuereinrichtung 32 gibt dann über die Leistungsstufe 13 eine gegenüber der Schweißleistung P_{Schw} herabgesetzte Vorwärmleistung P_{Vorw} während der Zeitdauer t₁ - t₂ ab, vgl. Fig. 3. Die Vorwärmleistung und/oder Vorwärm- und Entfeuchtungsdauer wird mit einer Vorwärmüberwachungseinrichtung 33 zusätzlich überwacht, welche die entsprechenden Ist-Signale über eine Leitung C₁ von der Vorwärmleistungs- und Vorwärmzeitsteuereinrichtung 32 erhält. Wenn die Vorwärmleistung oder die Vorwärm- und Entfeuchtungsdauer nicht in dem vorgegebenen Toleranzbereich liegen, meldet die Vorwärmüberwachungseinrichtung 33 diesen Fehler über das UND-Glied 23 an die Meldeeinrichtung 24 und den Drucker 25.

Die der Entscheidungsstelle S3 in dem Ablaufdiagramm entsprechende Auswahleinrichtung ist in dem Blockschaltbild gemäß Fig. 1 mit 34 bezeichnet. Sie steht mit einem Ausgang X9 des Umsetzers in Verbindung, von dem ein Signal in die Auswahleinrichtung 34 eingespeist wird, welches den vorgegebenen unteren Grenzwert der Umgebungstemperatur darstellt, welcher mittels des Abtasters 3 von dem Strichcode auf dem Etikett 2 abgelesen wurde. Außerdem erhält die Auswahleinrichtung zum Vergleich mit diesem vorgegebenen Wert ein Signal von der Leitung Xₜ, welches die aktuelle Umgebungstemperatur darstellt. Wenn die aktuelle Umgebungstemperatur den vorgegebenen Wert von beispielsweise 20°C unterschreitet, wird nicht nur die Vorwärmleistungs- und Vorwärmzeitsteuereinrichtung 32 aktiviert, sondern über den Ausgang 35 der Auswahleinrichtung auch eine Schweißenergieanpaßeinrichtung 36 aktiviert, und zwar dann, wenn die Soll-Schweißarbeit nicht als konstanter Wert bezogen auf eine vorgegebene bestimmte Temperatur des Fittings von beispielsweise 25°C bezogen ist, die eine konstante Anfangsbedingung für die Schweißung darstellt. Wenn hingegen bei der Vorgabe der Soll-Schweißarbeit nicht von einer konstanten Anfangstemperatur ausgegangen wird, sondern von einer variablen Anfangstemperatur des Fittings, wird mit der Schweißenergieanpaßeinrichtung 36 berücksichtigt, ob ein Vorwärm- und Entfeuchtungsschritt vor dem Schweißschritt stattfindet oder nicht, und zwar so, daß dem Heizwendel insgesamt die zur ordnungsgemäßen Schweißung erforderliche Schweißarbeit zugeführt wird. Mit anderen Worten, im Falle des Vorwärm- und Entfeuchtungsschritts kann die Soll-Schweißarbeit um die Vorwärm- und Entfeuchtungsarbeit reduziert sein. Der Ausdruck "Arbeit" steht hier synonym für elektrische Energie.

In dem Ablaufdiagramm nach Fig. 2 ist die Anpassung der Schweißarbeit bzw. Schweißenergie an die Vorwärm- und Entfeuchtungsarbeit in dem Block S5 angedeutet. In dem Ablaufbereich S6 findet dann der eigentliche Schweißschritt statt, wenn die Schweißung nicht gestört wird. Eine Störung würde mit der Meldeeinrichtung 24 und dem Drucker 25 in Fig. 1 protokolliert werden.

Das Wesentliche des erfindungsgemäßen Verfahrens geht aus dem Zeitdiagramm gemäß Fig. 3 hervor, in dem der Verlauf der dem Heizwendel zugeführten elektrischen Leistung P in Abhängigkeit von der Zeit (t) dargestellt ist:
In dem Zeitraum t₀ - t₁ finden Vorbereitungsschritte statt, während denen der Heizwendel mit keiner oder einer so geringen Leistung beaufschlagt wird - wie im Falle der Messung des Widerstands des Heizwendels-, daß praktisch keine Erwärmung stattfindet, im Unterschied zu dem nachfolgenden Vorwärm- und Entfeuchtungsschritt in dem Zeitabschnitt t₁ - t₂. Dieser Zeitabschnitt wird auch als Vorwärm- und Entfeuchtungsdauer bezeichnet. Das Vorwärmen erfolgt mit gegenüber der Schweißleistung P_{Schw} reduzierten Vorwärmleistung P_{Vorw}, die 10 - 30 % der Schweißleistung betragen kann. Die Vorwärm- und Entfeuchtungsdauer t₁ - t₃ ist lange genug, um auch im ungünstigen Fall bei niedrigen Temperaturen und viel Kondensat im Bereich der Schweißflächen sämtliche Feuchtigkeit zuverlässig zu verdampfen. Erst daran anschließend findet der eigentliche Schweißschritt mit der Schweißleistung P_{Schw} während der Schweißzeit t₂ - t₃ statt. Die gesamte, dem Fitting zugeführte Energie bzw. Arbeit bestehend aus der Vorwärmarbeit A_{Vorw} zwischen t₁ und t₂ und der Schweißarbeit A_{Schw} zwischen t₁ und t₃ reicht aus, um eine sichere Schweißung unter allen Umgebungsbedingungen, insbesondere bei niedriger Umgebungstemperatur, zu gewährleisten.

## Patentansprüche

1. Verfahren zum selbsttätigen Schweißen von Heizwendel-Fittingen im wesentlichen aus Kunststoff nach Maßgabe von Daten des Fittings, die insbesondere von einem Datenträger des Fittings selbstätig abgelesen werden, sowie unter Berücksichtigung der Umgebungstemperatur, mit einem nachfolgenden Schritt einer Schweißleistungszufuhr (S6) an den Heizwendel, wobei dem Schritt (S6) der Schweißleistungszufuhr (P_{Schw}) an den Heizwendel ein Vorwärm- und Entfeuchtungsschritt (S5) vorgeschaltet wird, bei dem der Heizwendel mit einer gegenüber der Schweißleistung (P_{Schw}) reduzierten Vorwärmleistung (P_{Vorw}) beaufschlagt wird, bei der die Schweißflächen des Fittings (1) und eines benachbarten Rohrs sowie die zwischen den Schweißflächen befindliche Luft auf eine gegenüber der Umgebungstemperatur erhöhte Temperatur, bei welcher der Kunststoff noch nicht plastifiziert wird, während einer vorgegebenen Vorwärm- und Entfeuchtungsdauer (t₁ - t₂) vorgewärmt wird,
**dadurch gekennzeichnet,**
daß der Vorwärm- und Entfeuchtungsschritt (S5) nur bei Unterschreiten eines vorgegebenen Werts der Umgebungstemperatur dem Schritt der Schweißleistungstemperatur (S5) vorgeschaltet wird und daß Parameter der Vorwärmleistung und der Vorwärm- und Entfeuchtungsdauer umgebungstemperaturabhängig selbsttätig ermittelt werden.

2. Verfahren nach Anspruch 1,
**dadurch gekennzeichnet,**
daß die erhöhte Temperatur, auf welche die Schweißflächen des Fittings (1) und eines benachbarten Rohrs sowie die zwischen den Schweißflächen befindlichen Luft während der Vorwärm- und Entfeuchtungsdauer vorgewärmt wird, in dem Temperaturbereich von 25 - 30°C liegt.

3. Verfahren nach Anspruch 1 oder 2,
**dadurch gekennzeichnet,**
daß die Vorwärmleistung 10 bis 30% der Schweißleistung beträgt.

4. Verfahren nach einem der Ansprüche 1 bis 3,
**dadurch gekennzeichnet,**
daß bei Vorschalten des Vorwärm- und Entfeuchtungsschritts vor dem Schritt der Schweißleistungszufuhr eine Herabsetzung der Schweißarbeit (A_{Schw}) nach Maßgabe der Vorwärm- und Entfeuchtungsarbeit (A_{Vorw}) erfolgt.

5. Verfahren nach einem der Ansprüche 1 bis 4,
**dadurch gekennzeichnet,**
daß die Schweißflächen des Fittings (1) und eines benachbarten Rohrs sowie die zwischen den Schweißflächen befindliche Luft auf eine vorgegebene Temperatur vorgewärmt wird.

6. Verfahren nach einem der vorangehenden Ansprüche,
**dadurch gekennzeichnet,**
daß die Vorwärm- und Entfeuchtungsarbeit (A_{Vorw}) auf die Einhaltung des Kriteriums selbsttätig überwacht wird, daß der Heizwendel mit der Vorwärm- und Entfeuchtungsarbeit (A_{Vorw}) innerhalb eines vorgegebenen Zeitrahmens der Vorwärm- und Entfeuchtungsdauer (t₁ - t₂) beaufschlagt wird.

7. Elektroschweißgerät zum selbsttätigen Schweißen von Heizwendelfittingen im wesentlichen aus Kunststoff, mit einer Eingabeeinrichtung, insbesondere einem Codebar-Abtaster für Fittingdaten sowie einem Umgebungstemperaturfühler, die mit dem Eingang einer Schweißsteuerungseinrichtung in Verbindung stehen, die Schaltkreise auf weist, in denen aus den Fittingdaten und der Umgebungstemperatur Signale von Soll- Schweißparametern wie Schweißstrom, Schweißzeit, Schweißleistung und/oder Schweißarbeit gebildet werden, nach deren Maßgabe eine Leistungsstufe, die mit dem Fitting elektrisch verbunden ist, gesteuert wird, sowie mit einer Ablaufsteuerung sowie mit einer Vorwärmleistungs- und Vorwärmzeitsteuereinrichtung (32), von deren Ausgang die Leistungsstufe (13) gesteuert wird, wobei die Vorwärmleistungs- und Vorwärmzeitsteuereinrichtung (32) sowie die Ablaufsteuerung dergestalt aufgebaut sind, daß vor einer Schweißleistungsabgabe an den Heizwendel (1) dieser mit einer gegenüber der Schweißleistung (P_{Schw}) herabgesetzten Vorwärmleistung (P_{Vorw}) durch die Leistungsstufe (13) beaufschlagt wird, wobei die Schweißflächen des Fittings (1) und eines benachbarten Rohrs sowie die zwischen den Schweißflächen befindliche Luft auf eine gegenüber der Umgebungstemperatur erhöhte Temperatur während einer vorgegebenen Vorwärm- und Entfeuchtungsdauer (t₁ - t₂) vorgewärmt ist,
**dadurch gekennzeichnet,**
daß der Umgebungstemperaturfühler (5) mit einem Eingang der Vorwärmleistungs- und Vorwärmzeitsteuereinrichtung (32) in Verbindung steht, die dergestalt ausgebildet ist, daß sie nur bei Unterschreiten eines vorgegebenen Werts der Umgebungstemperatur die Leistungsstufe zur Abgabe der Vorwärmleistung vor der Schweißleistungsabgabe steuert und daß in der Vorwärmleistungs- und Vorwärmzeitsteuereinrichtung (32) Parameter der Vorwärmleistung und Vorwärmzeit umgebungstemperaturabhängig einstellbar sind.

8. Elektroschweißgerät nach Anspruch 7,
**dadurch gekennzeichnet,**
daß die Vorwärmleistungs- und Vorwärmzeitsteuereinrichtung (32) über eine von dem Umgebungstemperaturfühler (5) umsteuerbare Auswahleinrichtung (34) mit dem Eingang der Leistungsstufe (13) in Verbindung steht, welche geeignet ist, die Vorwärmleistungs- und Vorwärmzeitsteuerung mit der Leistungsstufe (13) zu verbinden, wenn die Umgebungstemperatur einen vorgegebenen Wert unterschreitet.

9. Elektroschweißgerät nach Anspruch 7 oder 8,
**dadurch gekennzeichnet,**
daß die Vorwärmleistungs- und Vorwärmzeitsteuerung (32) mit einer Schweißenergieanpaßeinrichtung (36) in Verbindung steht, welche über die Leistungsstufe (13) die Schweißarbeit (A_{Schw}) nach Maßgabe der Vorwärm- und Entfeuchtungsarbeit (A_{Vorw}) herabsetzt.

10. Elektroschweißgerät nach einem der Ansprüche 6 bis 9,
**dadurch gekennzeichnet,**
daß eine Vorwärmüberwachungseinrichtung (33) vorgesehen ist, deren Eingang mit einem Ausgang der Vorwärmleistungs- und Vorwärmzeitsteuereinrichtung (32) verbunden ist und die ein Signal abgibt, wenn die Vorwärm- und Entfeuchtungszeitdauer (t₁ - t₂) außerhalb eines vorgegebenen Zeitrahmens liegt.

11. Elektroschweißgerät nach Anspruch 10,
**dadurch gekennzeichnet,**
daß das von der Vorwärmüberwachungseinrichtung (33) abgegebene Signal ein Meldesignal ist.

12. Elektroschweißgerät nach Anspruch 10 oder 11,
**dadurch gekennzeichnet,**
daß das von der Vorwärmüberwachungseinrichtung (33) abgegebene Signal den Schweißvorgang unterbindet.

## Claims

1. Method for automatic welding of heater coil fittings, mainly made of plastic, on account of characteristic data of the fitting, particularly those read automatically on a data medium on the fitting, and taking into account the ambient temperature, featuring a subsequent step (S6) of the application of the welding power to the heater coil, which step (S6) of the application of the welding power (P_{schw}) to the heater coil is preceded by a step (S5) for pre-warming and drying during which a pre-warming power (P_{schw}), which is reduced as compared to the welding power (P_{schw}), is applied to the heater coil for a pre-determined pre-warming and drying time (t₁-t₂), which causes as well the weld surfaces on the fitting (1) and a neighbouring tube as the air located between the weld surfaces to be pre-warmed to a temperature that has increased as compared to the ambient temperature, at which temperature the material does not plasticate yet,
**characterised in**
that the pre-warming and drying step (S5) precedes the step of the application of power at welding temperature (S6) only if the ambient temperature is below a pre-determined value, and that the parameters for pre-warming power and pre-warming and drying time are determined automatically on account of the ambient temperature.

2. Method according to claim 1
**characterised in**
that the increased temperature to which as well the weld surfaces on the fitting (1) and a neighbouring tube as the air located between the weld surfaces are pre-warmed during the pre-warming and drying time is comprised within a range from 25 to 30 °C.

3. Method according to claim 1 or 2
**characterised in**
that the pre-warming and drying power is at 10 to 30 percent as compared to the welding power.

4. Method according to one of the claims 1 through 3
**characterised in**
that the welding work (A_{schw}) is decreased on account of the pre-warming and drying work (A_{vorw}) if the pre-warming and drying step precedes the step of the application of the welding power.

5. Method according to one of the claims 1 through 4
**characterised in**
that as well the weld surfaces on the fitting (1) and a neighbouring tube as the air located between the weld surfaces are pre-warmed to a pre-determined temperature.

6. Method according to one of the aforementioned claims
**characterised in**
that the pre-warming and drying work (A_{vorw}) is automatically controlled in a way such that the criterion is respected which has it that the pre-warming and drying work (A_{vorw}) is applied to the heater coil for the pre-determined period of the pre-warming and drying time (t₁-t₂).

7. Electric welding device for automatic welding of heater coil fittings, mainly made of plastic, featuring both an entering device, in particular a bar code reading device for entering characteristic data of the fitting, and an ambient temperature sensor that are connected to the input of a welding controller, the electric circuits of which are such that from the characteristic data of the fitting and the ambient temperature they generate signals as nominal parameters for welding, such as welding current, welding time, welding power, and/or welding work, on account of which a power supply unit is controlled that is electrically connected to the fitting, and also featuring a process controller and a pre-warming power and time control unit (32) from whose output the power supply unit is controlled (13); of which the pre-warming power and time control unit (32) and the process controller are constructed such that a pre-warming power (P_{schw}), which is reduced as compared to the welding power (P_{schw}), is applied to the heater coil (1) by way of the power supply unit (13) before the application of the welding power (P_{schw}) to it, which causes as well the weld surfaces on the fitting (1) and a neighbouring tube as the air located between the weld surfaces to be pre-warmed for a pre-determined pre-warming and drying time (t₁-t₂) to a temperature that has increased as compared to the ambient temperature,
**characterised in**
that the ambient temperature sensor (5) is connected to the pre-warming power and time control unit (32) in such a way as to control the power supply unit so that it applies the pre-warming and drying power before applying the welding power only if the ambient temperature is below a pre-determined value, and that the parameters for pre-warming and drying power can be set in the pre-warming power and time control unit (32) on account of the ambient temperature.

8. Electric welding device according to claim 7
**characterised in**
that the pre-warming power and time control unit (32) is connected to the input of the power supply unit (13) via a selection device (34) regulated by the ambient temperature sensor (5), which is suitable for connecting the pre-warming power and time control unit to the power supply unit (13) if the ambient temperature is below a pre-determined value.

9. Electric welding device according to claim 7 or 8
**characterised in**
that the pre-warming power and time control unit (32) is connected to a welding power adapting device (36) that decreases by way of the power supply unit (13) the welding work (A_{schw}) on account of the pre-warming and drying work (A_{vorw}).

10. Electric welding device according to one of the claims 7 through 9
**characterised in**
that a pre-warming monitoring unit (33) is integrated, the input of which is connected to one output of the pre-warming power and time control unit (32) and which generates a signal if the period of the pre-warming and drying time (t₁-t₂) is not comprised within a pre-determined time range.

11. Electric welding device according to claim 10
**characterised in**
that the signal generated by the pre-warming monitoring unit (33) is a warning signal.

12. Electric welding device according to claim 10 or 11
**characterised in**
that the signal generated by the pre-warming monitoring unit (33) stops the welding process.

## Revendications

1. Procédé pour le soudage automatique de raccords, notamment en plastique, pourvus d'un filament chauffant en spirale, en fonction des caractéristiques du raccord, en particulier celles lues automatiquement sur un support d'information apposé au raccord, ainsi qu'en prenant en compte la température ambiante, lequel comporte une étape (S6) d'application de la puissance de soudage (P_{schw}) au filament chauffant succédant à une étape (S5) de pré-chauffe et de séchage pendant laquelle une puissance de pré-chauffe (P_{vorw}), moins intense que la puissance de soudage (P_{schw}), est appliquée au filament chauffant pendant un temps de pré-chauffe et de séchage prédéterminé (t₁-t₂), pour pré-chauffer, par son action, les superficies à souder sur le raccord (1) et un tube avoisinant ainsi que l'air situé entre les superficies à souder et pour les porter à une température, supérieure à la température ambiante, à laquelle le matériau ne se plastifie pas encore ;
caractérisé en ce
que l'étape de pré-chauffe et de séchage (S5) ne précède l'étape d'application de la puissance à température de soudage (S6) que si la température ambiante est inférieure à une valeur prédéterminée, et que les réglages pertinents pour la puissance de pré-chauffe et le temps de pré-chauffe et de séchage sont déterminés automatiquement en fonction de la température ambiante.

2. Procédé selon la revendication 1
caractérisé en ce
que la plage de température supérieure à laquelle les superficies à souder sur le raccord (1) et un tube avoisinant ainsi que l'air situé entre les superficies à souder sont portés pendant le temps de pré-chauffe et de séchage se trouve comprise entre 25 et 30 °C.

3. Procédé selon la revendication 1 ou 2
caractérisé en ce
que la puissance de pré-chauffe est comprise entre 10 et 30 pour cent de la puissance de soudage.

4. Procédé selon l'une quelconque des revendications 1 à 3
caractérisé en ce
que le travail de soudage (A_{schw}) est abaissé en fonction du travail de pré-chauffe et de séchage (A_{vorw}) si l'étape de pré-chauffe et de séchage précède l'étape de l'application de la puissance de soudage.

5. Procédé selon l'une quelconque des revendications 1 à 4
caractérisé en ce
que les superficies à souder sur le raccord (1) et un tube avoisinant ainsi que l'air situé entre les superficies à souder sont portées à une température prédéterminée.

6. Procédé selon l'une quelconque des revendications précédentes
caractérisé en ce
que le travail de pré-chauffe et de séchage (A_{vorw}) est commandé automatiquement de façon à respecter le critère qui pose que le travail de pré-chauffe et de séchage (A_{vorw}) est appliqué au filament chauffant pendant la durée prédéterminée du temps de pré-chauffe et de séchage (t₁-t₂).

7. Dispositif d'électrosoudage pour le soudage automatique de raccords, notamment en plastique, pourvus d'un filament chauffant en spirale, lequel comporte une unité de saisie, en particulier un lecteur optique de codes-barres pour la saisie des caractéristiques du raccord, ainsi qu'un capteur de la température ambiante qui sont reliés à l'entrée d'une unité de commande du soudage munie de circuits électriques par l'intermédiaire desquels sont formés, à partir des caractéristiques du raccord et de la température ambiante, des signaux relatifs aux paramètres nominaux du soudage, tels le courant de soudage, le temps de soudage, la puissance de soudage, et/ou le travail de soudage, en fonction desquels est commandée l'unité de puissance reliée par la voie électrique au raccord, ainsi que d'une commande du processus ainsi que d'une unité de commande de la puissance de pré-chauffe et du temps de pré-chauffe (32) depuis laquelle est commandée, par sa sortie, l'unité de puissance (13) ; et dont l'unité de commande de la puissance de pré-chauffe et du temps pré-chauffe (32) et la commande du processus sont réalisées de manière à ce qu'une puissance de pré-chauffe (P_{vorw}), moins intense que la puissance de soudage (P_{schw}), soit appliquée, par l'action de l'unité de puissance (13), au filament chauffant (1) avant que ce dernier soit exposé à la puissance de soudage, ce dont la conséquence est que pendant un temps de pré-chauffe et de séchage prédéterminé (t₁-t₂), les superficies à souder sur le raccord (1) et un tube avoisinant ainsi que l'air situé entre les superficies à souder sont préchauffées et portées à une température supérieure à la température ambiante ;
caractérisé en ce
que le capteur de la température ambiante (5) est relié à l'unité de commande de la puissance de pré-chauffe et du temps pré-chauffe (32) de telle manière à ce qu'il n'actionne l'unité de puissance en vue de l'application d'une puissance de pré-chauffe avant l'application de la puissance de soudage que si la température ambiante est inférieure à une valeur prédéterminée, et que les paramètres de la puissance de pré-chauffe et du temps pré-chauffe puissent être réglés, dans l'unité de commande de la puissance de pré-chauffe et du temps de pré-chauffe (32), en fonction de la température ambiante.

8. Dispositif d'électrosoudage selon la revendication 7
caractérisé en ce
que la connexion depuis l'unité de commande de la puissance de pré-chauffe et du temps de pré-chauffe (32) à l'entrée de l'unité de puissance (13) passe par un dispositif de sélection (34) étant sous l'influence de régulation du capteur de la température ambiante (5), lequel dispositif est susceptible d'établir la connexion entre l'unité de commande de la puissance de pré-chauffe et du temps de pré-chauffe et l'unité de puissance (13) si la température ambiante est inférieure à une valeur prédéterminée.

9. Dispositif d'électrosoudage selon la revendication 7 ou 8
caractérisé en ce
que l'unité de commande de la puissance de pré-chauffe et du temps de pré-chauffe (32) est reliée à un dispositif d'adaptation de la puissance de soudage (36) qui abaisse, par l'intermédiaire de l'unité de puissance (13), le travail de soudage (A_{schw}) en fonction du travail de pré-chauffe et de séchage (A_{vorw}).

10. Dispositif d'électrosoudage selon l'une quelconque des revendications 7 à 9
caractérisé en ce
qu'une unité de contrôle de la pré-chauffe (33) est prévue dont l'entrée est reliée à une sortie de l'unité de commande de la puissance de pré-chauffe et du temps de pré-chauffe (32) et qui émet un signal si la durée du temps de pré-chauffe et de séchage (t₁-t₂) dépasse une plage de temps prédéterminée.

11. Dispositif d'électrosoudage selon la revendication 10
caractérisé en ce
que le signal émis par l'unité de contrôle de la pré-chauffe (33) est un signal d'avertissement.

12. Dispositif d'électrosoudage selon la revendications 10 ou 11
caractérisé en ce
que le signal émis par l'unité de contrôle de la pré-chauffe (33) interrompt le processus de soudage.
